# EUROPÄISCHE PATENTSCHRIFT

(11) **EP 2 560 830 B1**
(45) Veröffentlichungstag und Bekanntmachung des Hinweises auf die Patenterteilung: **24.08.2016**
(21) Anmeldenummer: 11703437.1
(22) Anmeldetag: 08.02.2011
(51) Int. Cl.: B60C 11/12, B60C 11/04

(54) **FAHRZEUGLUFTREIFEN**
PNEUMATIC VEHICLE TYRE
PNEU DE VÉHICULE

(30) Priorität: 19.04.2010 DE 102010016508
(43) Veröffentlichungstag der Anmeldung: 27.02.2013
(73) Patentinhaber: Continental Reifen Deutschland GmbH, 30165 Hannover (DE)
(72) Erfinder: SEIDEL, Michael, 30171 Hannover (DE); BLOM, Martine, Hannover 30161 (DE)
(74) Vertreter: Finger, Karsten
(86) Internationale Anmeldenummer: PCT/EP2011/051768
(87) Internationale Veröffentlichungsnummer: WO 2011/131381

(56) Entgegenhaltungen:
- WO-A1-2010/063753
- JP-A- 10 129 218
- JP-A- 2008 007 047
- US-A- 2 246 479
- US-A1- 2004 003 879

## Beschreibung

Die Erfindung betrifft einen Fahrzeugluftreifen mit profiliertem Laufstreifen mit von Rillen begrenzten radial erhabenen Profilelementen und mit zumindest in einigen der Profilelemente ausgebildeten Feineinschnitten mit jeweils zwei den Feineinschnitt begrenzenden im Wesentlichen korrespondierend zueinander ausgebildeten parallelen Feineinschnittswänden, wobei die in der die Bodenkontaktoberfläche bildenden Mantelfläche des Profilelementes ausgebildete erste Haupterstreckungsrichtung des Feineinschnitts ihre größte Richtungskomponente in axialer Richtung A des Fahrzeugluftreifens aufweist und wobei der Feineinschnitt in den senkrecht zur ersten Haupterstreckungsrichtung in der Bodenkontaktoberfläche ausgebildeten Schnittebenen sich von der die Bodenkontaktoberfläche bildenden Mantelfläche bis zum Feineinschnittsgrund über eine in radialer Richtung R gemessene Tiefe T des Feineinschnitts erstreckt und mit einem ersten radial äußeren Erstreckungsbereich, welcher sich von der die Bodenkontaktoberfläche bildenden Mantelfläche nach radial innen über eine in radialer Richtung R gemessene Höhe h₁ mit (1/2)T≤h₁≤0,9T erstreckt, und mit einen zweiten radial inneren Erstreckungsbereich, welcher sich im Anschluss an den ersten Erstreckungsbereich in radialer Richtung R nach innen über eine in radialer Richtung R gemessene Höhe h₂ bis zum Feineinschnittsgrund erstreckt, ausgebildet ist, wobei der Feineinschnitt in den senkrecht zur ersten Haupterstreckungsrichtung ausgebildeten Schnittebenen jeweils im ersten radial äußeren Erstreckungsbereich längs einer zweiten Haupterstreckungsrichtung, die einen Neigungswinkel α mit 0°≤ α ≤3° zur Radialen R aufweist, verlaufend von der Mantelfläche bis zum zweiten radial inneren Erstreckungsbereich ausgerichtet ist.

Derartige Fahrzeugluftreifen mit Feineinschnitten sind bekannt. Die Feineinschnitte erstrecken sich dabei mit einer ersten Haupterstreckungsrichtung in der Mantelfläche des Profilelementes im Wesentlichen in axialer Richtung und senkrecht zu dieser ersten Haupterstreckungsrichtung in einer zweite Haupterstreckungsrichtung im Wesentlichen in radialer Richtung geradlinig nach innen bis zum Feineinschnittsgrund. Es ist auch bekannt, derartige Feineinschnitte in ihrer radialen Erstreckung um eine zweite Haupterstreckungsrichtung zickzack- oder wellenförmig verlaufend in Richtung Feineinschnittsgrund auszubilden, wobei auch bei diesen Feineinschnitte der radial innere Erstreckungsbereich bis zum Feineinschnittsgrund geradlinig als Verlängerung der zweiten Haupterstreckungsrichtung in radialer Richtung verlaufend ausgebildet sind.

Bei all diesen Feineinschnitten wird die jeweilige Feineinschnittswirkung des Öffnens und Schließens mit den hierdurch verbundenen traktionsverbessernden Eigenschaften ermöglicht, die allerdings eine Spannungskonzentration am radial inneren Rillenfeineinschnittsgrund, eine erhöhte Materialbelastung im radial inneren Erstreckungsbereich des Feineinschnitts und eine erhöhte Kerbwirkung nach sich zieht. Diese Effekte wirken reduzierend auf die Haltbarkeit der Profilelemente.

Aus der gattungsgemäßen US 2 246 479 ist ein Laufstreifenprofil bekannt, in welchem "J"-förmige Schlitze ausgebildet sind, die sich, ausgehend von der radial äußeren Mantelfläche über einen ersten Erstreckungsbereich in radialer Richtung nach innen hin geradlinig erstrecken und sich der Verlängerung des ersten Erstreckungsbereichs im weiteren Erstreckungsverlauf unter Bildung einer U-förmigen 180°-Wendung wieder nach radial außen erstrecken und dann stumpf im Gummimaterial enden. Auf diese Weise wird durch den Schlitz eine Art Hakenform im Reifenprofil gebildet, welche dazu führen soll, dass das gesamte vom Haken umschlossene Material aus dem Laufstreifenprofil herausfällt, sobald das Laufstreifenprofil soweit abgefahren ist, dass nur noch die U-Form des Hakens verbleibt, wodurch eine Art Rille entstehen soll.

Aus der US 2004/0003879 A1 ist es bekannt, einen Feineinschnitt in einem Laufstreifenprofil längs seiner gesamten radialen Erstreckung gekrümmt verlaufend auszubilden. Aus der JP 2008/0007047 ist es bekannt, einen Feineinschnitt in einem radial äußeren, kürzer ausgebildeten Erstreckungsabschnitt geradlinig und in einem radial inneren, länger erstreckt ausgebildeten Erstreckungsbereich sichelförmig auszubilden.

Der Erfindung liegt die Aufgabe zugrunde, in einfacher Weise ohne Einschränkung der Vorteile der Nutzung von Feineinschnitten die Belastbarkeit und Haltbarkeit derartiger Profile zu verbessern.

Die Aufgabe wird erfindungsgemäß durch die Ausbildung eines Fahrzeugluftreifen mit profiliertem Laufstreifen mit von Rillen begrenzten radial erhabenen Profilelementen und mit zumindest in einigen der Profilelemente ausgebildeten Feineinschnitten mit jeweils zwei den Feineinschnitt begrenzenden im Wesentlichen korrespondierend zueinander ausgebildeten parallelen Feineinschnittswänden, wobei die in der die Bodenkontaktoberfläche bildenden Mantelfläche des Profilelementes ausgebildete erste Haupterstreckungsrichtung des Feineinschnitts ihre größte Richtungskomponente in axialer Richtung A des Fahrzeugluftreifens aufweist und wobei der Feineinschnitt in den senkrecht zur erste Haupterstreckungsrichtung in der Bodenkontaktoberfläche ausgebildeten Schnittebenen sich von der die Bodenkontaktoberfläche bildenden Mantelfläche bis zum Feineinschnittsgrund über eine in radialer Richtung R gemessene Tiefe T des Feineinschnitts erstreckt und mit einem ersten radial äußeren Erstreckungsbereich, welcher sich von der die Bodenkontaktoberfläche bildenden Mantelfläche nach radial innen über eine in radialer Richtung R gemessene Höhe h₁ mit (1/2)T≤h₁≤0,9T erstreckt, und mit einen zweiten radial inneren Erstreckungsbereich, welcher sich im Anschluss an den ersten Erstreckungsbereich in radialer Richtung R nach innen über eine in radialer Richtung R gemessene Höhe h₂ bis zum Feineinschnittsgrund erstreckt, ausgebildet ist, wobei der Feineinschnitt in den senkrecht zur ersten Haupterstreckungsrichtung ausgebildeten Schnittebenen jeweils im ersten radial äußeren Erstreckungsbereich längs einer zweiten Haupterstreckungsrichtung, die einen Neigungswinkel α mit 0°≤ α ≤3° zur Radialen R aufweist, verlaufend von der Mantelfläche bis zum zweiten radial inneren Erstreckungsbereich ausgerichtet ist, gemäß den Merkmalen von Anspruch 1 gelöst, bei dem der Feineinschnitt in den senkrecht zur ersten Haupterstreckungsrichtung ausgebildeten Schnittebenen jeweils im zweiten radial inneren Erstreckungsbereich ausgehend vom ersten radial äußeren Erstreckungsbereich bis zum Feineinschnittsgrund zu einer Seite hin gekrümmt verlaufend ausgebildet ist, und bei dem die den Feineinschnitt von der Krümmung nach außen begrenzende Feineinschnittswand nach radial außen von einem den zweiten Erstreckungsbereich nach radial außen zum ersten Erstreckungsbereich begrenzenden Übergangspunkt P und im Feineinschnittgrund von einem Fußpunkt Q begrenzt wird, wobei die in den senkrecht zur ersten Haupterstreckungsrichtung ausgebildeten Schnittebenen ausgebildete Verbindungsstrecke s zwischen dem Übergangspunkt P und dem Fußpunkt Q mit einem Neigungswinkel β mit 15°≤β≤ 45° - insbesondere mit 30°≤β≤ 35° - zur radialen Richtung R verlaufend ausgebildet ist.

Die Ausbildung des Feineinschnitts ermöglicht die vollständige Nutzung der Vorteile der Feineinschnitte hinsichtlich des Öffnens und der Schließwirkung und hinsichtlich der traktionsverbessernden Eigenschaften. Der im radial inneren Erstreckungsbereich bis zum Feineinschnittsgrund zur einen Seite hin gekrümmte Verlauf bewirkt eine Reduktion der Spannung im Bereich des radial inneren Erstreckungsbereichs des Feineinschnitts und ein Verteilen der Spannungen auf den gesamten bogenförmig gekrümmten Verlauf aus dem der Kerbwirkung unterliegenden Feineinschnittsgrund heraus. Der aus der längs der radialen Erstreckung des Feineinschnittes ausgebildeten Haupterstreckungsrichtung durch die Krümmung herausgedrehte Feineinschnittsgrund ermöglicht darüber hinaus eine Reduzierung der auftretenden Kerbwirkung. Auf diese Weise werden die materialermüdenden Belastungen im Feineinschnittsgrund reduziert und die Haltbarkeit des Feineinschnitts sowie des Profilelementes erhöht. Die Ausbildung mit dem Neigungswinkel β ermöglicht eine besondere Verringerung der Kerbwirkung und eine sichere Ausformbarkeit.

Besonders vorteilhaft zur Reduzierung der Kerbwirkung ist die Ausbildung eines Fahrzeugluftreifens gemäß den Merkmalen von Anspruch 2, wobei die im zweiten Erstreckungsbereich den Feineinschnitt von der Krümmung nach außen begrenzende Feineinschnittswand mit einem Krümmungsverlauf mit einem Krümmungsradius R₁ mit 2mm ≤ R₁≤ 10mm um einen Krümmungsmittelpunkt M₁ ausgebildet ist, welcher auf der von dieser Feineinschnittswand wegweisenden Seite des Feineinschnitts liegt.

Besonders vorteilhaft ist die Ausbildung eines Fahrzeugluftreifens gemäß den Merkmalen von Anspruch 3, wobei die den Feineinschnitt von der Krümmung nach außen begrenzende Feineinschnittswand im Feineinschnittgrund von einem Fußpunkt Q begrenzt wird, wobei die im Fußpunkt Q an die Krümmung der Feineinschnittswand ausgebildete Tangente t mit einem Neigungswinkel γ mit 100°≤γ≤ 160° - insbesondere mit 130°≤γ≤ 140° - zur radialen Richtung R verlaufend ausgebildet ist. Dies ermöglicht eine besondere Verringerung der Kerbwirkung und eine sichere Ausformbarkeit.

Besonders vorteilhaft ist die Ausbildung eines Fahrzeugluftreifens gemäß den Merkmalen von Anspruch 4, wobei der Feineinschnitt im zweiten radial inneren Erstreckungsbereich über seine radiale Erstreckung der Höhe h₂ im Wesentlichen mit konstanter Schnittbreite d ausgebildet ist. Dies ermöglicht eine bessere Kraftverteilung bei Belastung im zweiten radial inneren Erstreckungsbereich und hierdurch eine reduzierte Kerbwirkung.

Besonders vorteilhaft ist die Ausbildung eines Fahrzeugluftreifens gemäß den Merkmalen von Anspruch 5, wobei die beiden den Feineinschnitt begrenzenden Feineinschnittswände im zweiten Erstreckungsbereich längs ihrer radialen Erstreckung gleichsinnig gekrümmt ausgebildet sind. Dies ermöglicht eine verbesserte Ausformbarkeit bei Reduktion der inneren Beweglichkeit des Profils, wodurch Abrieb und Rollwiderstand verbessert und die die Kerbwirkung verursachenden Kräfte reduziert werden.

Besonders vorteilhaft ist die Ausbildung eines Fahrzeugluftreifens gemäß den Merkmalen von Anspruch 6, wobei die beiden den Feineinschnitt begrenzenden Feineinschnittswände im zweiten Erstreckungsbereich längs ihrer radialen Erstreckung gegensinnig gekrümmt ausgebildet sind, wobei die den Feineinschnitt zum Krümmungsmittelpunkt des Feineinschnitt hin begrenzende Feineinschnittswand einen größeren Krümmungsradius R₂ aufweist als die andere Feineinschnittwand. Dies begünstigt eine gute Ein-und Ausformbarkeit und ermöglicht eine optimierte Verteilung der Kräftebeim Durchlaufen durch den Reifenlatsch, wodurch die Kerbwirkung reduziert wird.

Besonders vorteilhaft ist die Ausbildung eines Fahrzeugluftreifens gemäß den Merkmalen von Anspruch 7, wobei der Feineinschnitt im zweiten radial inneren Erstreckungsbereich längs seiner radialen Erstreckung ausgehend vom radial äußeren Erstreckungspunkt P nach radial innen zunächst mit zunehmender Schnittbreite und dann zum radial inneren Erstreckungspunkt Q hin wieder mit abnehmender Schnittbreite ausgebildet ist. Dies begünstigt eine gute Ein-und Ausformbarkeit und ermöglicht eine optimierte Verteilung der Kräftebeim Durchlaufen durch den Reifenlatsch, wodurch die Kerbwirkung reduziert wird.

Besonders vorteilhaft ist die Ausbildung eines Fahrzeugluftreifens gemäß den Merkmalen von Anspruch 8, wobei die den Feineinschnitt zur Krümmungsachse hin nach innen begrenzende Feineinschnittswand nach radial außen von einem den zweiten Erstreckungsbereich nach radial außen zum ersten Erstreckungsbereich begrenzenden Übergangspunkt P₂ und im Feineinschnittgrund von einem Fußpunkt Q₂ begrenzt wird und eine geradlinige Verbindung der beiden Punkte P₂ und Q₂ bildet. Dies begünstigt eine gute Ein- und Ausformbarkeit und ermöglicht eine optimierte Verteilung der Kräftebeim Durchlaufen durch den Reifenlatsch, wodurch die Kerbwirkung reduziert wird.

Besonders vorteilhaft ist die Ausbildung eines Fahrzeugluftreifens gemäß den Merkmalen von Anspruch 9, wobei der Feineinschnitt in den senkrecht zur ersten Haupterstreckungsrichtung ausgebildeten Schnittebenen im ersten Erstreckungsbereich längs seiner radialen Erstreckung ausgehend vom zweiten Erstreckungsbereich nach außen wenigstens bis in eine radiale Position im Abstand h₃ von der Mantelfläche mit h₃≤(1/3)T mit im Wesentlichen konstanter Schnittbreite ausgebildet ist.

Besonders vorteilhaft ist die Ausbildung eines Fahrzeugluftreifens gemäß den Merkmalen von Anspruch 10, wobei der Feineinschnitt ausgehend von der radialen Position im Abstand h₃ von der Mantelfläche nach radial außen bis zur Mantelfläche mit kontinuierlich zunehmender Schnittbreite ausgebildet ist, wobei die maximale Schnittbreite B in der Mantelfache mit B <0,5h₃ ausgebildet ist, wobei insbesondere die Verdickung zu der von der Krümmung des zweiten Erstreckungsbereiches wegweisenden Seite des Feineinschnittes hin ausgebildet ist. Dies begünstigt eine gute Ein-und Ausformbarkeit.

Besonders vorteilhaft ist die Ausbildung eines Fahrzeugluftreifens gemäß den Merkmalen von Anspruch 11, wobei die Krümmung des Feineinschnittes im zweiten Erstreckungsbereich zur Fahrtrichtung des Fahrzeugreifen bei Vorwärtsfahrt hin gerichtet ausgebildet ist. Dies ermöglicht bei Belastung ein gleichmäßiges Zusammenpressen des Feineinschnitts und eine Reduktion der wirkenden Kräfte im Feineinschnittsgrund.

Besonders vorteilhaft ist die Ausbildung eines Fahrzeugluftreifens gemäß den Merkmalen von Anspruch 12, wobei die Krümmung des Feineinschnittes im zweiten Erstreckungsbereich zur Fahrtrichtung des Fährzeugreifen bei Rückwärtsfahrt hin gerichtet ausgebildet ist. Hierdurch werden die im Feineinschnitt wirkenden Kräfte beim Durchlaufen des Reifenlatsches vergleichmäßigt verteilt, wodurch die Kerbwirkung im Feineinschnittsgrund reduziert werden kann.

Die Erfindung wird im Folgenden an Hand der in den Figuren 1 bis 4 dargestellten Ausführungsbeispiele näher erläutert. Dabei zeigen
- Fig.1: einen axialen Teilabschnitt eines Umfangsabschnittes eines Laufstreifenprofiles eines Fahrzeugluftreifens in Draufsicht,
- Fig.2: das Laufstreifenprofil von Fig.1 in Schnittdarstellung gemäß Schnitt II-II von Fig.1 zur Erläuterung des Tiefenverlaufes der Feineinschnitte,
- Fig.3: einen Feineinschnitt gemäß Darstellung von Fig.2 mit alternativer Ausbildung des Tiefenverlaufes des Feineinschnittes,
- Fig.4: einen Feineinschnitt gemäß Darstellung von Fig.2 mit weiterer alternativer Ausbildung des Tiefenverlaufes des Feineinschnitts.

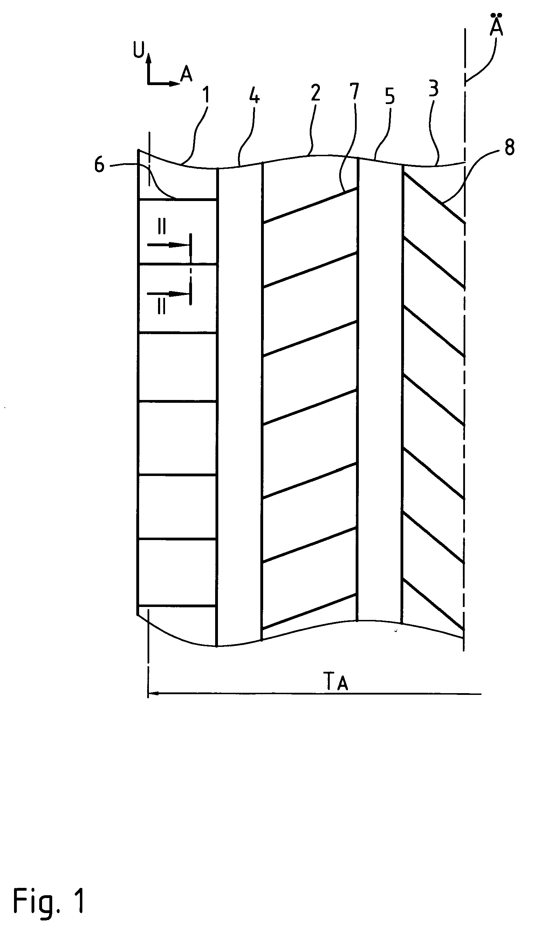

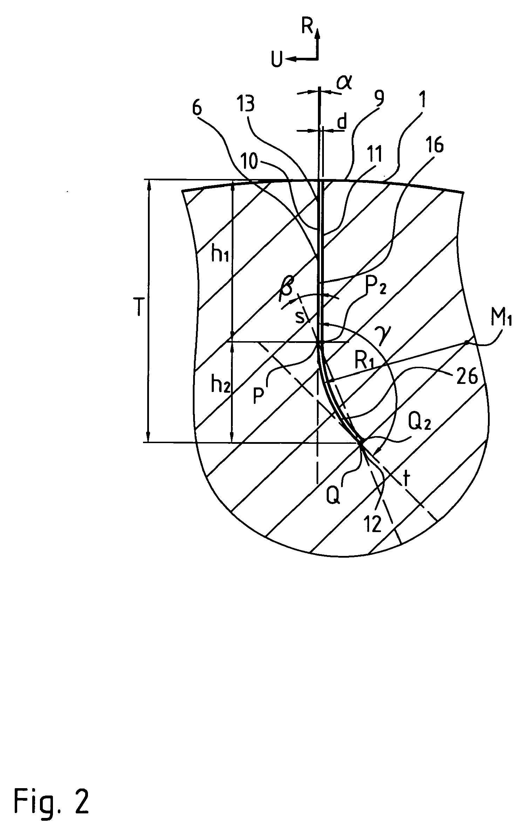

Die Figuren 1 und 2 zeigen einen Ausschnitt eines Laufstreifenprofils mit mehreren in axialer Richtung A des Fahrzeugluftreifens nebeneinander angeordneten radial erhabenen Profilrippen 1, 2, 3, die jeweils über den gesamten Umfang des Fahrzeugluftreifens erstreckt ausgebildet sind und in axialer Richtung A des Fahrzeugluftreifens durch über den gesamten Umfang des Fahrzeugluftreifens in Umfangsrichtung U ausgerichtete Umfangsrillen 4 bzw. 5 voneinander beabstandet sind.

Der Einfachheit halber ist in der Fig.1 lediglich die linke Seite eines Laufstreifenprofiles ausgehend von der Äquatorebene Ä bis zur linken Reifenschulter hin dargestellt. Die Profilrippe 1 ist eine Schulterprofilrippe, die Profilrippe 3 ist eine zentrale Profilrippe. Die zentrale Profilrippe 3 und die Profilrippe 2 sind durch die Umfangsrille 5 voneinander axial beabstandet. Die Profilrippe 2 und die Schulterprofilrippe 1 sind durch die Umfangsrille 4 axial voneinander beabstandet. Die Bodenaufstandsfläche erstreckt sich in axialer Richtung mit ihrer Breite T_{A} bis in die linke Profilrippe 1 hinein. Die Profilrippe 2 ist in bekannter Weise mit über den Umfang des Fahrzeugluftreifen verteilt angeordneten parallelen Feineinschnitten 7 ausgebildet, die sich von der Umfangsrille 4 bis in die Umfangsrille 5 hinein erstrecken und die in der den Reifen nach radial außen begrenzenden Mantelfläche 9 des Reifens geradlinig verlaufend ausgebildet ist, wobei sie eine axiale und eine in Umfangsrichtung gerichteten Richtungskomponente aufweist, von denen die axiale Richtungskomponente die größere ist.

Auch in der Profilrippe 3 sind über den Umfang des Fahrzeugluftreifens hinweg parallele Feineinschnitte 8 verteilt ausgebildet, die sich in axialer Richtung über die gesamte Profilrippe 3 ausgehend von der Umfangsrille 5 hinweg erstrecken und die in der den Reifen nach radial außen begrenzenden Mantelfläche 9 des Reifens geradlinig verlaufend ausgebildet ist, wobei sie eine axiale und eine in Umfangsrichtung gerichteten Richtungskomponente aufweist, von denen die axiale Richtungskomponente die größere ist. Die Schulterprofilblockreihe 1 ist mit über den gesamten Umfang des Fahrzeugluftreifens verteilt angeordneten parallelen Feineinschnitten 6 ausgebildet, die ausgehend von der Umfangsrille 4 in axialer Richtung A nach außen bis in den Erstreckungsbereich außerhalb der Bodenaufstandsfläche T_{A} hinein erstreckt ausgebildet sind und die in der Mantelfläche 9 des Fahrzeugluftreifens geradlinig verlaufend in axialer Richtung A erstreckt ausgebildet sind.

Fig.2 zeigt am Beispiel der Feineinschnitte 6 der Profilrippe 1 den Tiefenverlauf der Feineinschnitte 6. In analoger Weise sind auch die Feineinschnitte 7 bzw. 8 der Profilrippen 2 bzw. 3 in ihrem Tiefenverlauf ausgebildet.

Fig.2 zeigt dabei eine Schnittebene senkrecht zur Haupterstreckungsrichtung des Feineinschnittes 6 in der Mantelfläche 9. Bei den Feineinschnitten 6, die in der Mantelfläche 9 geradlinig verlaufen und in rein axialer Richtung ausgerichtet sind, ist diese Haupterstreckungsrichtung in der Mantelfläche 9 in axialer Richtung A ausgerichtet und die Schnittebene somit die senkrecht zur axialen Richtung A ausgebildete Schnittebene.

Wie in Fig.2 zu erkennen ist, ist der Feineinschnitt 6 von den beiden Schnittwänden 10 und 11 seitlich begrenzt, welche korrespondierend zueinander ausgebildet sind. Die Schnittwände 10 und 11 erstrecken sich im dargestellten Ausführungsbeispiel von Fig.2 über die gesamte radiale Erstreckung T des Feineinschnitts 6 ausgehend von der Mantelfläche 9 bis zum Feineinschnittsgrund 12 mit konstantem Abstand d zueinander, welcher die Schnittbreite definiert.

Die Schnittbreite d ist mit d < 0,6mm ausgebildet, beispielsweise mit d = 0,5 mm.

Der Feineinschnitt 6 erstreckt sich in einem radial äußeren Erstreckungsbereich 16 ausgehend von der Mantelfläche 9 nach radial innen über eine in radialer Richtung R gemessene Erstreckungshöhe H₁ geradlinig unter Einschluss eines Neigungswinkels α zur Radialen R mit α ≤ 3° und definiert die radiale Haupterstreckung 13 des Feineinschnitts. Im dargestellten Ausführungsbeispiel erstreckt sich der Feineinschnitt 6 in diesem radial äußeren Erstreckungsbereich 16 mit einem Neigungswinkel α = 0° zur Radialen R. Die radiale Erstreckungshöhe h₁ ist mit (1/2)T ≤ h₁ ≤ 0,9T ausgebildet. Im dargestellten Ausführungsbeispiel ist h₁ = (2/3)T gewählt.

Im Anschluss an den radial äußeren Erstreckungsbereich 16 erstreckt sich der Feineinschnitt 6 in radialer Richtung R nach innen in einem radial inneren Erstreckungsbereich 26 über eine radiale Erstreckungshöhe h₂ bis zum Feineinschnittsgrund 12, wobei die beiden Feineinschnittswände 10 und 11 im radial inneren Erstreckungsbereich 26 um einen Krümmungsmittelpunkt M₁ kreissegmentförmig gekrümmt verlaufend ausgebildet sind. Der Krümmungsmittelpunkt M₁ liegt auf der von der Feineinschnittswand 10 weg weisenden Seite des Feineinschnitts 6 in der Profilrippe 1.

Die Feineinschnittswand 10 ist dabei von einem die Feineinschnittswand 10 im radial inneren Erstreckungsbereich 26 nach radial außen zum radial äußeren Erstreckungsbereich 16 hin begrenzenden Übergangspunkt P bis zu dem die Feineinschnittswand 10 nach radial innen im Feineinschnittsgrund 12 begrenzenden Punkt Q erstreckt und mit einem Radius R₁ um den Mittelpunkt M₁ gekrümmt verlaufend ausgebildet. Die Feineinschnittswand 11 ist dabei von einem die Feineinschnittswand 11 im radial inneren Erstreckungsbereich 26 nach radial außen zum radial äußeren Erstreckungsbereich 16 hin begrenzenden Übergangspunkt P₂ bis zu dem die Feineinschnittswand 11 nach radial innen im Feineinschnittsgrund 12 begrenzenden Punkt Q₂ erstreckt und mit einem Radius um den Mittelpunkt M₁ gekrümmt verlaufend ausgebildet. Der Krümmungsradius R₁ der Feineinschnittswand 10 ist größer als der Krümmungsradius der Feineinschnittswand 11 ausgebildet.

Der Krümmungsradius R₁ ist mit 2mm ≤ R₁ ≤ 10mm ausgebildet. Im dargestellten Ausführungsbeispiel ist R₁ mit R₁ = 9mm ausgebildet.

Die die beiden die Feineinschnittswand 10 im radial inneren Erstreckungsbereich begrenzenden Punkte P und Q verbindende Schnittlinie s ist mit einem Neigungswinkel ß zur Radialen R verlaufend ausgebildet mit 15° ≤ ß ≤ 45°. Im dargestellten Ausführungsbeispiel ist ß mit 30° ≤ ß ≤ 35° gewählt. In der konkret dargestellten Ausführung ist ß = 32° gewählt.

Die im Punkt Q an die Krümmungskonturlinie der Rillenwand 10 ausgebildete Tangente t ist mit einem Neigungswinkel γ zur Radialen R ausgebildet mit 100° ≤ y 160°. In besonderen Ausführungsbeispielen ist γ mit 130° ≤ γ ≤ 140° gewählt. Im dargestellten Ausführungsbeispiel ist γ = 135° gewählt.

Im dargestellten Ausführungsbeispiel ist der Krümmungsmittelpunkt M₁ in Umfangsrichtung U des Fahrzeugluftreifen gesehen auf derjenigen Seite der Haupterstreckung 13 des Feineinschnitts 6 im radial äußeren Erstreckungsbereichs 16 angeordnet, welche beim Drehen des Fahrzeugluftreifens bei Vorwärtsfahrt des Fahrzeugluftreifens dem Feineinschnitt 6 nachgeordnet ist. Der Krümmungsmittelpunkt M₁ liegt somit auf der dem Fahrzeugluftreifen bei Rückwärtsfahrt der Haupterstreckung 13 des Feineinschnitts 6 im radial äußeren Erstreckungsbereichs 16 vorgeordneten Umfangsseite und die Krümmung des Feineinschnitts ist im radial inneren Erstreckungsbereich 26 somit in Fahrtrichtung des Fahrzeugreifens bei Rückwärtsfahrt hin gerichtet ausgebildet.

In anderer Ausführung liegt der Krümmungsmittelpunkt M₁ auf der dem Fahrzeugluftreifen bei Vorwärtsfahrt der Haupterstreckung 13 des Feineinschnitts 6 im radial äußeren Erstreckungsbereichs 16 vorgeordneten Umfangsseite und die Krümmung des Feineinschnitts ist im radial inneren Erstreckungsbereich 26 somit in Fahrtrichtung des Fahrzeugreifens bei Vorwärtsfahrt hin gerichtet ausgebildet.

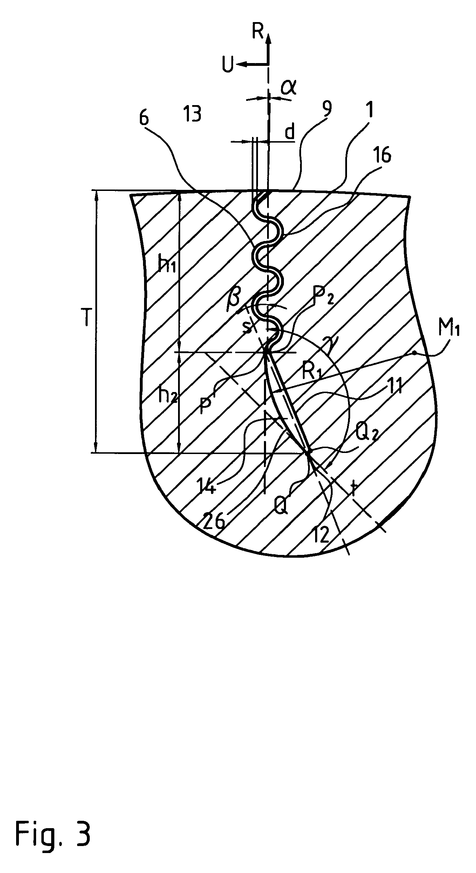

Fig.3 ist eine Ausbildung des Feineinschnittes 6 zu entnehmen, bei dem der Feineinschnitt 6 im radial äußeren Erstreckungsbereich 16 längs seiner Haupterstreckung 13 sich ausgehend von der Mantelfläche 9 über die gesamte radiale Erstreckungshöhe h₁ wellenlinienförmig oder zickzackförmig verläuft. Die geradlinige Haupterstreckung 13 des Feinschnitts ist die Nulllinie der Wellenform bzw. Zickzackform und ist unter dem Neigungswinkel α zur Radialen R ausgerichtet. Die durch die Rillenwände 10 und 11 gebildete Schnittbreite d des Feineinschnittes 6 ist auch in diesem Ausführungsbeispiel im radial äußeren Erstreckungsbereich 16 konstant.

Fig.3 zeigt ein weiteres Ausführungsbeispiel des Tiefenverlaufs des Feineinschnittes, bei dem im radial inneren Erstreckungsbereich 26 die Rillenwand 10 zwischen dem Übergangspunkt P und dem Punkt Q - wie in dem in Fig.2 dargestellten Ausführungsbeispiel - um den Krümmungsmittelpunkt M₁ mit Krümmungsradius R₁ gekrümmt verlaufend ausgebildet ist. Die Feineinschnittswand 11 ist in dem gezeigten Ausführungsbeispiel jedoch parallel zu der die Punkte P und Q verbindenden Gerade s geradlinig zwischen den Punkten P₂ und Q₂ verlaufend ausgebildet. Die beiden Rillenwände 10 und 11 schließen im radial inneren Erstreckungsbereich 26 des Feineinschnitts 6 eine verdickte, einen Hohlraum bildende Öffnung 14 ein, welche ausgehend vom Übergangspunkt P der Rillenwand 10 nach radial innen hin zunächst mit zunehmender Breite d und im Anschluss in ihrem radial inneren Erstreckungsbereich bis zu dem die Rillenwand 10 nach radial innen begrenzenden Punkt Q hin wieder mit kontinuierlich abnehmender Breite d des Einschnitts ausgebildet ist.

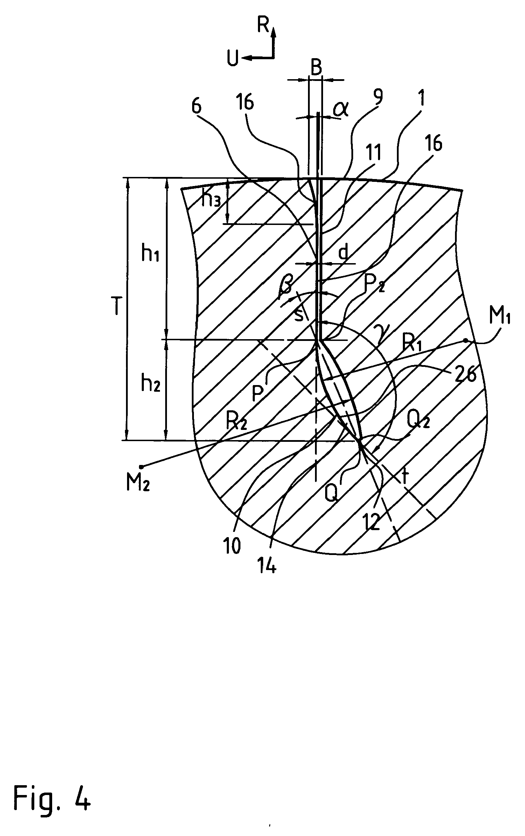

Fig.4 zeigt ein weiteres Ausführungsbeispiel des radial inneren Erstreckungsbereiches 26 des Feineinschnitts 6, bei welcher die Rillenwand 10 - wie im Ausführungsbeispiel von Fig.2 - zwischen den beiden die Rillenwand 10 im radial inneren Erstreckungsbereich 26 begrenzenden Punkten P und Q um den Krümmungsmittelpunkt M₁ mit Krümmungsradius R₁ gekrümmt verlaufend ausgebildet ist. Die Rillenwand 11 ist in diesem Ausführungsbeispiel zwischen den Punkten P₂ und Q₂ kreissegmentförmig um einen Krümmungsmittelpunkt M₂ mit Krümmungsradius R₂ gekrümmt verlaufend ausgebildet, wobei der Krümmungsmittelpunkt M₂ auf der von der Feineinschnittswand 11 wegweisenden Seite des Feineinschnittes 6 in der Profilrippe 1 ausgebildet ist und somit auf der anderen Seite des Feineinschnittes 6 in der Profilrippe 1 ausgebildet ist als der Krümmungsmittelpunkt M₁. Der Krümmungsradius R₂ ist dabei mit R₂ > R₁ ausgebildet. Die beiden Feineinschnittswände 10 und 11 schließen somit auch in diesem Ausführungsbeispiel in dem radial inneren Erstreckungsbereich 26 eine einen Hohlraum bildende Verdickung 14 des Feineinschnittes 6 ein mit einer ausgehend von dem die Feineinschnittswand 10 nach radial außen begrenzenden Übergangspunkt P nach radial innen zunächst kontinuierlich zunehmenden Einschnittsdicke d und einer im Anschluss im radial inneren Erstreckungsbereich des radial inneren Erstreckungsabschnitts 26 bis zum Punkt Q hin wieder kontinuierlich abnehmender Einschnittsdicke d.

In Fig. 4 ist darüber hinaus ein weiteres Ausführungsbeispiel des radial äußeren Erstreckungsbereichs 16 eines Feineinschnittes 6 dargestellt, bei welchem der Feineinschnitt 6 in dem senkrecht zur ersten Haupterstreckungsrichtung ausgebildeten Schnittebenen im radial äußeren Erstreckungsbereich 16 längs seiner radialen Erstreckung ausgehend vom radial inneren Erstreckungsbereich 26 nach außen bis in eine radiale Position im Abstand h₃ von der Mantelfläche 9 mit h₃≤(1/3)T mit konstanter Schnittbreite d ausgebildet ist. Ausgehend von der radialen Position im Abstand h₃ von der Mantelfläche 9 nach radial außen ist der Feineinschnitt 6 bis zur Mantelfläche 9 mit kontinuierlich zunehmender Schnittbreite d ausgebildet, wobei die maximale Schnittbreite B in der Mantelfläche 9 mit B < (1/2)h₃ ausgebildet ist. Hierzu ist die Feineinschnittswand 10 ab der Position im Abstand h₃ von der Mantelfläche 9 nach radial außen in der vom Krümmungsmittelpunkt M₁ wegweisenden Umfangsrichtung U mit kontinuierlich zunehmendem Abstand von der Haupterstreckung 13 des Feineinschnitts 6 im radial äußeren Erstreckungsbereich 16 ausgebildet. Im dargestellten Ausführungsbeispiel ist die Feineinschnittswand 16 im radialen Erstreckungsbereich ausgehend von der Position im Abstand h₃ von der Mantelfläche bis zur Mantelfläche 9 hin hierzu um einen Krümmungsmittelpunkt, welcher auf der vom Krümmungsmittelpunkt M₁ wegweisenden Umfangsseite des Feineinschnitts 6 ausgebildet ist, gekrümmt ausgebildet. Die Feineinschnittswände 10 und 11 schließen im Erstreckungsbereich der Höhe h₃ auf diese Weise eine sich nach radial außen erweiternde bzw. verdickende Öffnung 15 ein, welche auf der vom Krümmungsmittelpunkt M₁ wegweisenden Umfangsseite der Haupterstreckung 13 des Feineinschnittes angeordnet ist. In anderer nicht dargestellter Ausführung ist die Rillenwand 10 im radialen Erstreckungsbereich h₃ geradlinig ausgebildet.

Auch wenn in Fig.1 die Feineinschnitte 6, 7 und 8 jeweils in der Mantelfläche 9 geradlinig ausgebildet sind, sind in anderer nicht dargestellter Ausführung die Feineinschnitte wellen- oder zickzackförmig verlaufend in der Mantelfläche 9 ausgebildet, wobei die Nulllinie der Zick-Zack bzw. Wellenform in der Mantelfläche 9 die Haupterstreckungsrichtung des Feineinschnitts in der Mantelfläche 9 bildet.

Das in Fig. 1 dargestellte Laufstreifenprofil ist ein Rippenprofil mit Feineinschnitten. In anderer nicht dargestellter Ausführung ist wenigstens eine der Umfangsrippen durch eine Profilblockreihe ersetzt, welche aus in Umfangsrichtung hintereinander angeordneten Profilblockelementen, die durch Querrillen in Umfangsrichtung voneinander beabstandet sind, ausgebildet ist, und die Feineinschnitte sind in den Profilblockelementen der Profilblockreihe ausgebildet.

Das Laufstreifenprofil ist im dargestellten Ausführungsbeispiel ein Laufstreifenprofil eines Pkw-Reifens. In anderer Ausführung ist das Laufstreifenprofil ein Laufstreifenprofil eines Nutzfahrzeugreifens. In weiterer alternativer Ausführung ist das Laufstreifenprofil ein Laufstreifenprofil eines Van-Reifens oder eines Reifens für Leichttransporter.

### Bezugszeichenliste

### (Teil der Beschreibung)

- 1: Profilrippe
- 2: Profilrippe
- 3: Profilrippe
- 4: Umfangsrille
- 5: Umfangsrille
- 6: Feineinschnitt
- 7: Feineinschnitt
- 8: Feineinschnitt
- 9: Mantelfläche
- 10: Feineinschnittswand
- 11: Feineinschnittswand
- 12: Feineinschnittsgrund
- 13: Haupterstreckung
- 14: Verdickte Öffnung
- 15: Verdickte Öffnung
- 16: Äußerer Erstreckungsbereich
- 26: Innerer Erstreckungsbereich

## Patentansprüche

1. Fahrzeugluftreifen mit profiliertem Laufstreifen mit von Rillen (4,5) begrenzten radial erhabenen Profilelementen (1,2,3) und mit zumindest in einigen der Profilelemente (1,2,3) ausgebildeten Feineinschnitten (6,7,8) mit jeweils zwei den Feineinschnitt (6) begrenzenden im Wesentlichen korrespondierend zueinander ausgebildeten parallelen Feineinschnittswänden (10,11), wobei die in der die Bodenkontaktoberfläche bildenden Mantelfläche (9) des Profilelementes (1) ausgebildete erste Haupterstreckungsrichtung des Feineinschnitts (6) ihre größte Richtungskomponente in axialer Richtung A des Fahrzeugluftreifens aufweist und wobei der Feineinschnitt (6) in den senkrecht zur erste Haupterstreckungsrichtung in der Bodenkontaktoberfläche ausgebildeten Schnittebenen sich von der die Bodenkontaktoberfläche bildenden Mantelfläche (9) bis zum Feineinschnittsgrund (12) über eine in radialer Richtung R gemessene Tiefe T des Feineinschnitts (6) erstreckt und mit einem ersten radial äußeren Erstreckungsbereich (16), welcher sich von der die Bodenkontaktoberfläche bildenden Mantelfläche (9) nach radial innen über eine in radialer Richtung R gemessene Höhe h₁ mit (1/2)T<h₁<0,9T erstreckt, und mit einen zweiten radial inneren Erstreckungsbereich (26), welcher sich im Anschluss an den ersten Erstreckungsbereich (16) in radialer Richtung R nach innen über eine in radialer Richtung R gemessene Höhe h₂ bis zum Feineinschnittsgrund (12) erstreckt, ausgebildet ist,
wobei der Feineinschnitt (6) in den senkrecht zur ersten Haupterstreckungsrichtung ausgebildeten Schnittebenen jeweils im ersten radial äußeren Erstreckungsbereich (16) längs einer zweiten Haupterstreckungsrichtung (13), die einen Neigungswinkel α mit 0°≤ α ≤3° zur Radialen R aufweist, verlaufend von der Mantelfläche (9) bis zum zweiten radial inneren Erstreckungsbereich (26) ausgerichtet ist, wobei
dass der Feineinschnitt (6) in den senkrecht zur ersten Haupterstreckungsrichtung ausgebildeten Schnittebenen jeweils im zweiten radial inneren Erstreckungsbereich (26) ausgehend vom ersten radial äußeren Erstreckungsbereich (16) bis zum Feineinschnittsgrund (12) zu einer Seite hin gekrümmt verlaufend ausgebildet ist, **dadurch gekennzeichnet, dass** die den Feineinschnitt (6) von der Krümmung nach außen begrenzende Feineinschnittswand (10) nach radial außen von einem den zweiten Erstreckungsbereich (26) nach radial außen zum ersten Erstreckungsbereich (16) begrenzenden Übergangspunkt P und im Feineinschnittgrund (12) von einem Fußpunkt Q begrenzt wird,
wobei die in den senkrecht zur ersten Haupterstreckungsrichtung ausgebildeten Schnittebenen ausgebildete Verbindungsstrecke s zwischen dem Übergangspunkt P und dem Fußpunkt Q mit einem Neigungswinkel β mit 15°≤β≤ 45° - insbesondere mit 30°≤β≤ 35° - zur radialen Richtung R verlaufend ausgebildet ist.

2. Fahrzeugluftreifen gemäß den Merkmalen von Anspruch 1,
wobei die im zweiten Erstreckungsbereich (26) den Feineinschnitt (6) von der Krümmung nach außen begrenzende Feineinschnittswand (10) mit einem Krümmungsverlauf mit einem Krümmungsradius R₁ mit 2mm ≤ R₁≤ 10mm um einen Krümmungsmittelpunkt M₁ ausgebildet ist, welcher auf der von dieser Feineinschnittswand (10) wegweisenden Seite des Feineinschnitts (6) liegt.

3. Fahrzeugluftreifen gemäß den Merkmalen von einem oder mehreren der vorangegangenen Ansprüche,
wobei die den Feineinschnitt (6) von der Krümmung nach außen begrenzende Feineinschnittswand (10 im Feineinschnittgrund (12) von einem Fußpunkt Q begrenzt wird,
wobei die im Fußpunkt Q an die Krümmung der Feineinschnittswand (10) ausgebildete Tangente t mit einem Neigungswinkel γ mit 100°≤γ≤ 160° - insbesondere mit 130°≤γ≤ 140° - zur radialen Richtung R verlaufend ausgebildet ist.

4. Fahrzeugluftreifen gemäß den Merkmalen von einem oder mehreren der vorangegangenen Ansprüche,
wobei der Feineinschnitt (6) im zweiten radial inneren Erstreckungsbereich (26) über seine radiale Erstreckung der Höhe h₂ im Wesentlichen mit konstanter Schnittbreite d ausgebildet ist.

5. Fahrzeugluftreifen gemäß den Merkmalen von einem oder mehreren der Ansprüche 1 bis 3,
wobei die beiden den Feineinschnitt (6) begrenzenden Feineinschnittswände (10,11) im zweiten Erstreckungsbereich (26) längs ihrer radialen Erstreckung gleichsinnig gekrümmt ausgebildet sind.

6. Fahrzeugluftreifen gemäß den Merkmalen von einem oder mehreren der Ansprüche 1 bis 3,
wobei die beiden den Feineinschnitt (6) begrenzenden Feineinschnittswände (10,11) im zweiten Erstreckungsbereich (26) längs ihrer radialen Erstreckung gegensinnig gekrümmt ausgebildet sind, wobei die den Feineinschnitt zum Krümmungsmittelpunkt des Feineinschnitt hin begrenzende Feineinschnittswand (11) einen größeren Krümmungsradius R₂ aufweist als die andere Feineinschnittwand (10).

7. Fahrzeugluftreifen gemäß den Merkmalen von einem oder mehreren der Ansprüche 1 bis 3,
wobei der Feineinschnitt (6) im zweiten radial inneren Erstreckungsbereich (26) längs seiner radialen Erstreckung ausgehend vom radial äußeren Erstreckungspunkt P nach radial innen zunächst mit zunehmender Schnittbreite d und dann zum radial inneren Erstreckungspunkt Q hin wieder mit abnehmender Schnittbreite d ausgebildet ist.

8. Fahrzeugluftreifen gemäß den Merkmalen von Anspruch 5,
wobei die den Feineinschnitt (6) zur Krümmungsachse hin nach innen begrenzende Feineinschnittswand (11) nach radial außen von einem den zweiten Erstreckungsbereich (26) nach radial außen zum ersten Erstreckungsbereich (16) begrenzenden Übergangspunkt P₂ und im Feineinschnittgrund (12) von einem Fußpunkt Q₂ begrenzt wird und eine geradlinige Verbindung der beiden Punkte P₂ und Q₂ bildet.

9. Fahrzeugluftreifen gemäß den Merkmalen von einem oder mehreren der vorangegangenen Ansprüche,
wobei der Feineinschnitt (6) in den senkrecht zur ersten Haupterstreckungsrichtung ausgebildeten Schnittebenen im ersten Erstreckungsbereich (16) längs seiner radialen Erstreckung ausgehend vom zweiten Erstreckungsbereich (26) nach außen wenigstens bis in eine radiale Position im Abstand h₃ von der Mantelfläche (9) mit h₃≤(1/3)T mit im Wesentlichen konstanter Schnittbreite d ausgebildet ist.

10. Fahrzeugluftreifen gemäß den Merkmalen von Anspruch 9,
wobei der Feineinschnitt (6) ausgehend von der radialen Position im Abstand h₃ von der Mantelfläche (9) nach radial außen bis zur Mantelfläche (9) mit kontinuierlich zunehmender Schnittbreite d ausgebildet ist, wobei die maximale Schnittbreite B in der Mantelfäche mit B <0,5h₃ ausgebildet ist,
wobei insbesondere die Verdickung (15) zu der von der Krümmung des zweiten Erstreckungsbereiches (26) wegweisenden Seite des Feineinschnittes (6) hin angeordnet ausgebildet ist.

11. Fahrzeugluftreifen gemäß den Merkmalen von einem oder mehreren der vorangegangenen Ansprüche,
wobei die Krümmung des Feineinschnittes (6) im zweiten Erstreckungsbereich (26) zur Fahrtrichtung des Fahrzeugreifen bei Vorwärtsfahrt hin gerichtet ausgebildet ist.

12. Fahrzeugluftreifen gemäß den Merkmalen von einem oder mehreren der Ansprüche 1 bis 10,
wobei die Krümmung des Feineinschnittes (6) im zweiten Erstreckungsbereich (26) zur Fahrtrichtung des Fahrzeugreifen bei Rückwärtsfahrt hin gerichtet ausgebildet ist.

## Claims

1. Pneumatic vehicle tire having a profiled tread with radially elevated profile elements (1, 2, 3) which are delimited by channels (4, 5) and having sipes (6, 7, 8), which sipes are formed at least in some of the profile elements (1, 2, 3) and have in each case two parallel sipe walls (10, 11) which delimit the sipe (6) and which are formed substantially correspondingly to one another, wherein the first main direction of extent, which is formed in the ground contact surface-forming outside surface (9) of the profile element (1), of the sipe (6) has its greatest directional component in the axial direction A of the pneumatic vehicle tire, and wherein, in the section planes perpendicular to the first main direction of extent in the ground contact surface, the sipe (6) extends from the ground contact surface-forming outside surface (9) to the sipe base (12) over a depth T of the sipe (6) measured in the radial direction R, and which sipes have a first, radially outer region of extent (16) which extends from the ground contact surface-forming outside surface (9) radially inward over a height h₁ measured in the radial direction R, where (1/2)T ≤ h₁ ≤ 0.9T, and which sipes have a second, radially inner region of extent (26) which is formed so as to adjoin the first region of extent (16) inward in the radial direction R and which extends over a height h₂, measured in the radial direction R, to the sipe base (12),
wherein, in the section planes perpendicular to the first main direction of extent, the sipe (6), in each case in the first, radially outer region of extent (16), runs from the outside surface (9) to the second, radially inner region of extent (26) so as to be aligned along a second main direction of extent (13) which has an angle of inclination α with respect to the radial R, wherein 0° ≤ α ≤ 3°, wherein,
in the section planes perpendicular to the first main direction of extent, the sipe (6) is formed, in each case in the second, radially inner region of extent (26), so as to run in a curved manner toward one side proceeding from the first, radially outer region of extent (16) to the sipe base (12), **characterized in that** the sipe wall (10) which delimits the sipe (6) toward the outside of the curvature is delimited in the radially outward direction by a transition point P, which delimits the second region of extent (26) with respect to the first region of extent (16) in the radially outward direction, and is delimited at the sipe base (12) by a foot point Q,
wherein the connecting path s between the transition point P and the foot point Q in the section planes perpendicular to the first main direction of extent runs with an angle of inclination β with respect to the radial direction R, where 15° ≤ β ≤ 45°, in particular 30° ≤ β ≤ 35°.

2. Pneumatic vehicle tire as per the features of Claim 1,
wherein the sipe wall (10) which delimits the sipe (6) toward the outside of the curvature in the second region of extent (26) is formed with a curvature profile with a curvature radius R₁, where 2 mm ≤ R₁ ≤ 10 mm, about a curvature central point M₁ which lies on that side of the sipe (6) which points away from said sipe wall (10).

3. Pneumatic vehicle tire as per the features of one or more of the preceding claims,
wherein the sipe wall (10) which delimits the sipe (6) toward the outside of the curvature is delimited at the sipe base (12) by a foot point Q, wherein the tangent t to the curvature of the sipe wall (10) at the foot point Q runs at an angle of inclination γ with respect to the radial direction R, where 100° ≤ γ ≤ 160°, in particular 130° ≤ γ ≤ 140°.

4. Pneumatic vehicle tire as per the features of one or more of the preceding claims,
wherein the sipe (6) is formed substantially with a constant section width d over its radial extent of height h₂ in the second, radially inner region of extent (26).

5. Pneumatic vehicle tire as per the features of one or more of Claims 1 to 3,
wherein the two sipe walls (10, 11) which delimit the sipe (6) are formed so as to be curved in the same direction along their radial extent in the second region of extent (26).

6. Pneumatic vehicle tire as per the features of one or more of Claims 1 to 3,
wherein the two sipe walls (10, 11) which delimit the sipe (6) are formed so as to be curved in opposite directions along their radial extent in the second region of extent (26), wherein the sipe wall (11) which delimits the sipe in the direction of the curvature central point of the sipe has a greater curvature radius R₂ than the other sipe wall (10).

7. Pneumatic vehicle tire as per the features of one or more of Claims 1 to 3,
wherein the sipe (6), in the second, radially inner direction of extent (26), is formed with a section width d which initially increases in the radially inward direction along the radial extent of said sipe proceeding from the radially outer point of extent P, and which then decreases again toward the radially inner point of extent Q.

8. Pneumatic vehicle tire as per the features of Claim 5,
wherein the sipe wall (11) which inwardly delimits the sipe (6) in the direction of the axis of curvature is delimited in the radially outward direction by a transition point P₂ which delimits the second region of extent (26) with respect to the first region of extent (16) in the radially outward direction, and is delimited at the sipe base (12) by a foot point Q₂, and forms a rectilinear connection of the two points P₂ and Q₂.

9. Pneumatic vehicle tire as per the features of one or more of the preceding claims,
wherein, in the section planes perpendicular to the first main direction of extent, the sipe (6) is formed in the first region of extent (16) with a substantially constant section width d along its radial extent proceeding from the second region of extent (26) outward at least to a radial position at a distance h₃ from the outside surface (9), where h₃ ≤ (1/3)T.

10. Pneumatic vehicle tire as per the features of Claim 9,
wherein the sipe (6) is formed with a section width d which increases continuously proceeding from the radial position at a distance h₃ from the outside surface (9) radially outward to the outside surface (9), wherein the maximum section width B is formed at the outside surface, where B < 0.5h₃,
wherein in particular the thickening (15) is arranged to that side of the sipe (6) which points away from the curvature of the second region of extent (26).

11. Pneumatic vehicle tire as per the features of one or more of the preceding claims,
wherein the curvature of the sipe (6) in the second region of extent (26) is oriented in the direction of travel of the vehicle tire during forward travel.

12. Pneumatic vehicle tire as per the features of one or more of Claims 1 to 10,
wherein the curvature of the sipe (6) in the second region of extent (26) is orientated in the direction of travel of the vehicle tire during reverse travel.

## Revendications

1. Bandage pneumatique pour roue de véhicule présentant une bande de roulement profilée dotée d'éléments profilés (1, 2, 3) débordant radialement et délimités par des rainures (4, 5) et de fines entailles (6, 7, 8) formées dans certains des éléments profilés (1, 2, 3) et présentant chacune deux parois parallèles (10, 11) de fine entaille qui délimitent la fine entaille (6) et dont les formes se correspondent essentiellement,
la direction d'extension principale de la fine entaille (6) dans la surface d'enveloppe (9) de l'élément profilé (1) qui forme la surface de contact avec le sol présentant sa plus grande composante d'orientation dans la direction axiale A du bandage pneumatique pour roue de véhicule,
la fine entaille (6) s'étendant dans les plans de coupe formés dans la surface de contact avec le sol perpendiculairement à la première direction d'extension principale depuis la surface d'enveloppe (9) qui forme la surface de contact avec le sol jusqu'au fond (12) de la fine entaille sur une profondeur T de la fine entaille (6) mesurée dans la direction radiale R, et présentant une première partie (16) d'extension radiale extérieure qui s'étend radialement vers l'intérieur depuis la surface d'enveloppe (9) formant la surface de contact avec le sol sur une hauteur h₁, mesurée dans la direction radiale R, telle que (1/2) T ≤ h₁ ≤ 0,9 T, et
présentant une deuxième partie (26) d'extension radialement intérieure qui s'étend à la suite de la première partie (16) d'extension dans la direction radiale R vers l'intérieur sur une hauteur h₂, mesurée dans la direction radiale R, jusqu'au fond (12) de la fine entaille,
la fine entaille (6) étant orientée dans les plans de coupe formés perpendiculairement par rapport à la première direction d'extension principale dans la première partie (16) d'extension radiale extérieure le long d'une deuxième direction (13) d'extension principale qui forme par rapport à la radiale R un angle d'inclinaison α tel que 0° ≤ α ≤ 3° et qui s'étend de la surface d'enveloppe (9) jusqu'à la deuxième partie (26) d'extension radiale intérieure,
la fine entaille (6) s'étendant en courbe vers un côté dans les plans de coupe formés perpendiculairement à la première direction d'extension axiale, chaque fois dans la deuxième partie (26) d'extension radiale intérieure, entre la première partie (16) d'extension radiale extérieure et le fond (12) de la fine entaille, **caractérisé en ce que**
la paroi (10) de la fine entaille qui délimite la fine entaille (6) depuis la courbure jusqu'à l'extérieur est délimitée dans la direction radiale extérieure par un point de transition P qui délimite la deuxième partie d'extension (26) radialement vers l'extérieur en direction de la première partie d'extension (16) et par un point de pied Q situé au fond (12) de la fine entaille et
**en ce que** la ligne de liaison s formée dans les plans de coupe perpendiculaires à la première direction d'extension principale s'étend entre le point de transition P et le point de pied Q sous un angle d'inclinaison β tel que 15° ≤ β ≤ 45°, notamment 30° ≤ β ≤ 35°, par rapport à la direction radiale R.

2. Bandage pneumatique pour roue de véhicule selon les caractéristiques de la revendication 1, dans lequel la paroi (10) qui délimite vers l'extérieur la fine entaille (6) depuis la courbure dans la deuxième partie (26) de l'extension présente une courbure dont le rayon R₁ est tel que 2 mm ≤ R₁ ≤ 10 mm autour d'un centre de courbure M₁ qui est situé sur le côté de la fine entaille (6) non tourné vers cette paroi (10) de la fine entaille.

3. Bandage pneumatique pour roue de véhicule selon les caractéristiques d'une ou plusieurs des revendications précédentes, dans lequel la paroi (10) de la fine entaille qui délimite la fine entaille (6) vers l'extérieur depuis la courbure est délimitée dans le fond (12) de la fine entaille par un point de pied Q, la tangente t à la courbure de la paroi (10) de la fine entaille au point de pied Q s'étendant sous un angle d'inclinaison γ tel que 100° ≤ γ ≤ 160° et en particulier 130° ≤ γ ≤ 140° par rapport à la direction radiale R.

4. Bandage pneumatique pour roue de véhicule selon les caractéristiques d'une ou plusieurs des revendications précédentes, dans lequel la fine entaille (6) présente sur son extension radiale de hauteur h₂ une largeur constante d essentiellement constante dans la deuxième partie (26) d'extension radialement intérieure.

5. Bandage pneumatique pour roue de véhicule selon les caractéristiques d'une ou plusieurs des revendications 1 à 3, dans lequel les deux parois (10, 11) de fine entaille qui délimitent la fine entaille (6) ont une courbure de même sens le long de leur extension radiale dans la deuxième partie (26) de leur extension.

6. Bandage pneumatique pour roue de véhicule selon les caractéristiques d'une ou plusieurs des revendications 1 à 3, dans lequel les deux parois (10, 11) de fine entaille qui délimitent la fine entaille (6) ont des courbures opposées le long de leur extension radiale dans la deuxième partie (26) de leur extension, la paroi (11) de la fine entaille qui délimite la fine entaille en direction du centre de courbure de la fine entaille présentant un rayon de courbure R₂ plus grand que l'autre paroi (10) de la fine entaille.

7. Bandage pneumatique pour roue de véhicule selon les caractéristiques d'une ou plusieurs des revendications 1 à 3, dans lequel dans la deuxième partie (26) de son extension radiale intérieure, le long de son extension radiale, partant du point P de l'extension radiale extérieure dans la direction radiale intérieure, la fine entaille (6) présente d'abord une largeur d'entaille d croissante et ensuite une largeur d'entaille d qui diminue de nouveau en direction du point Q de son extension radiale intérieure.

8. Bandage pneumatique pour roue de véhicule selon les caractéristiques de la revendication 5, dans lequel la paroi (11) de la fine entaille qui délimite la fine entaille (6) vers l'intérieur en direction de l'axe de courbure est délimitée radialement vers l'extérieur par un point de transition P₂ qui délimite la deuxième partie (26) de son extension radialement vers l'extérieur en direction de la première partie (16) de son extension et est délimité dans le fond (12) de la fine entaille par un point de pied Q₂, pour former une liaison en ligne droite entre les points P₂ et Q₂.

9. Bandage pneumatique pour roue de véhicule selon les caractéristiques d'une ou plusieurs des revendications précédentes, dans lequel, dans les plans de coupe formés perpendiculairement à la première direction d'extension principale, la fine entaille (6) présente une largeur d'entaille d essentiellement constante dans la première partie (16) de son extension, le long de son extension radiale partant de la deuxième partie (26) de son extension en direction de l'extérieur, au moins jusqu'à une position radiale située à une distance h₃ de la surface d'enveloppe (9) telle que h₃ ≤ (1/3) T.

10. Bandage pneumatique pour roue de véhicule selon les caractéristiques de la revendication 9, dans lequel, partant de la position radiale à distance h₃ de la surface d'enveloppe (9), radialement vers l'extérieur, la fine entaille (6) présente jusqu'à la surface d'enveloppe (9) une largeur d'entaille d qui croît de manière continue, la largeur maximale B de l'entaille étant formée dans la surface d'enveloppe de telle sorte que B < 0,5 h₃, et l'épaississement (15) étant disposé en direction du côté de la fine entaille (6) non tourné vers la courbure de la deuxième partie (26) de son extension.

11. Bandage pneumatique pour roue de véhicule selon les caractéristiques d'une ou plusieurs des revendications précédentes, dans lequel la courbure de la fine entaille (6) dans la deuxième partie (26) de son extension est orientée dans la direction de déplacement vers l'avant du bandage de roue du véhicule.

12. Bandage pneumatique pour roue de véhicule selon les caractéristiques d'une ou plusieurs des revendications 1 à 10, dans lequel la courbure de la fine entaille (6) dans la deuxième partie (26) de son extension est orientée dans la direction d'avancement vers l'arrière du bandage pour roue de véhicule.
